# EUROPEAN PATENT SPECIFICATION

(11) **EP 0 370 515 B1**
(45) Date of publication and mention of the grant of the patent: **01.02.1995**
(21) Application number: 89121700.2
(22) Date of filing: 24.11.1989
(51) Int. Cl.: F02B 27/02

(54) **V-type multi-cylinder engine air intake system**
Lufteinlasssystem für Mehrzylinderbrennkraftmaschine der V-Bauart
Système d'admission d'air pour moteur à plusieurs cylindres disposés en V

(30) Priority: 25.11.1988 JP 296039/88
(43) Date of publication of application: 30.05.1990
(73) Proprietor: YAMAHA HATSUDOKI KABUSHIKI KAISHA, Iwata-shi Shizuoka-ken, 438 (JP)
(72) Inventor: Suzuki, Takamitsu, Iwata-gun Shizuoka-ken (JP); Iwanami, Takeshi, Shizuoka-ken (JP); Yonezawa, Minoru, Iwata-shi Shizuoka-ken (JP)
(74) Representative: Grünecker, Kinkeldey, Stockmair & Schwanhäusser Anwaltssozietät

(56) References cited:
- DE-A- 3 529 388
- FR-A- 2 591 665
- GB-A- 2 180 594
- JP-A-61 212 627
- JP-A-62 103 415
- US-A- 4 649 876

## Description

The present invention relates to an air intake system of a V-type multi-cylinder engine having a pair of cylinder banks disposed in V-shape comprising surge tanks each disposed above each of the cylinder banks and air intake tubes each branched from one surge tank and connected with the associated cylinder, respectively, each air intake tube extending from the surge tank of the one cylinder bank to the associated cylinder of the other cylinder bank is communicated through an intake opening to said the other surge tank wherein the intake opening being controlled by a flap valve in response to the revolution speed of the engine.

It has been recently acknowledged that a high performance engine is provided with an air intake tube connecting the surge tank of the air intake system with an engine intake port, with both longer tubes for lower speed operation and shorter tubes for higher speed operation, which are used selectively according to the engine speed always to maintain a higher charging efficiency within a wide engine speed range from low to high and thus realize a higher engine output. However, to equip each of many V-type cylinders with both longer and shorter intake tubes requires so many tubes and intricated tubing which causes a very bulky engine with a larger overall height and length. To solve such problems, the French Patent FR-A-2 591 665 has disclosed an air intake system for a V-type multi-cylinder engine comprising search tanks situated above each cylinder bank of a V-type engine, as indicated in the preamble of claim 1. In that case, each surge tank is connected via individual intake passages to the cylinders of the other cylinder bank, and each individual intake passage also being connected to the other surge tank via an opening containing a valve. Said valve is to be provided within an aperture of a band with the respective intake passageway crossing the associated surge tank. Such a structure with a valve as a simple insertion in a hole is difficult to manufacture and tends to vibrate the valve shafts and valves. Therefore reliability of the opening and closing mechanism of the valve cannot be ensured. Furthermore, the air intake tubes and the related surge tanks are designed separately which leads to an assembly relatively complicated and cumbersome to be mounted. As the air intake tube is rigidly connected with the air intake passages of the respective cylinders, the transmission of vibrations from the intake system to the engine and vice versa undesirably aim at a noisy operation of the engine and, moreover, an accurately machine connecting area is required.

Therefore, it is an object of the present invention to provide an improved and compacted air intake system for a V-type multi-cylinder engine permitting ease of assembly and good manufacturing conditions while reducing vibrations within the air intake system.

In order to perform the afore-mentioned objective, the present invention sets forth an air intake system for V-type multi-cylinder engine as indicated in the introductory portion of the description and characterised in that each air intake tube comprises an integral socket defining said intake opening, and being disposed in the interior of the opposite surge tank, the flow area of the intake opening being controlled by said flap valve and that at least the air intake tubes with the intake sockets defining the intake openings and part of the surge tanks are designed integrally and that the integrated surge tanks and the air intake tubes are connected to the air intake passage of the cylinder through a rubber connector.

Further advantageous embodiments and modifications of the engine and related air intake system as indicated above are set out throughout the dependent claims.

According to a certain advantageous embodiment of the present invention the V-type multi-cylinder engine and the associated air intake system are characterised in that the air intake tube branched from the surge tank on one side crosses or makes contact with the surge tank on the other side while being connected to the cylinder located thereunder, and, at that portion of said air intake tube where it crosses or makes contact with the surge tank on the other side, said air intake tube is provided with an opening communicated with the interior of the surge tank on the other side and equipped with a control valve which is to be opened at higher engine speed and to be closed at a lower engine speed.

With such a construction as mentioned above only one intake tube for each cylinder is disposed between one pair of cylinder banks and only two surge tanks are required which result in a more compact air intake system and a compacted layout of the engine with reduced height and shorter overall length than systems comprised in the art provide.

According to the present invention, in particular an advantageous embodiment thereof as indicated above, the air suction system of the engine is adapted to supply air through the short tube portion formed by short circuiting through the intake through opening while the engine is running at a higher speed and to supply air through the long tube portion with the control valve closed while the engine is running at lower speed. Thus it is possible to achieve high engine output throughout a wide engine operating range from low speed to high speed. Further as preferably only as many air intake tubes as cylinders are arranged in between a pair of cylinder banks longitudinally of the engine (only one air intake tube per one cylinder) and, moreover, only two surge tanks are sufficient the overall height and length of the engine can be reduced to obtain a more compact engine as compared with those equipped with air intake systems comprised in the art.

In the following advantageous embodiments of the invention are described and explained in greater detail in conjunction with the accompanying drawings, wherein:
Figure 1 is a partially sectional side view of a air intake system according to an embodiment of the present invention, installed on a V-type multi-cylinder engine,
Figure 2 is a plan view showing the intake system of figure 1 with its top covers removed,
Figure 3 is an arrow view along the line III-III of figure 2,
Figure 4 is a partially sectional side view of an air intake system installed on a V-type multi-cylinder engine according to another embodiment of the present invention.

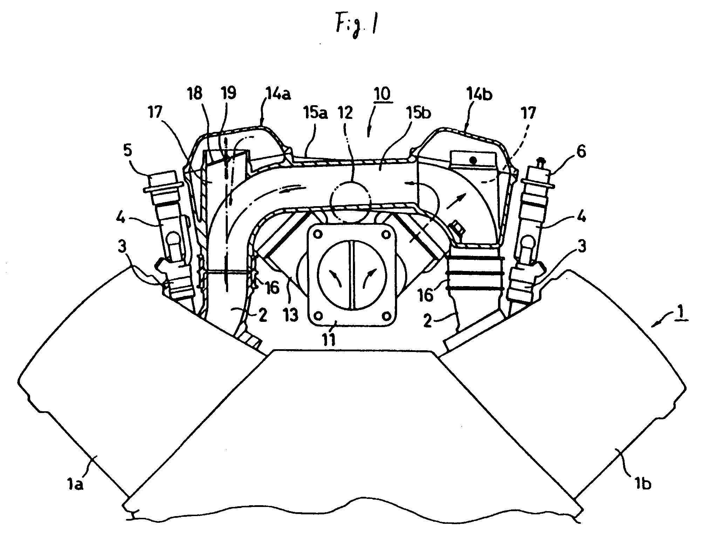

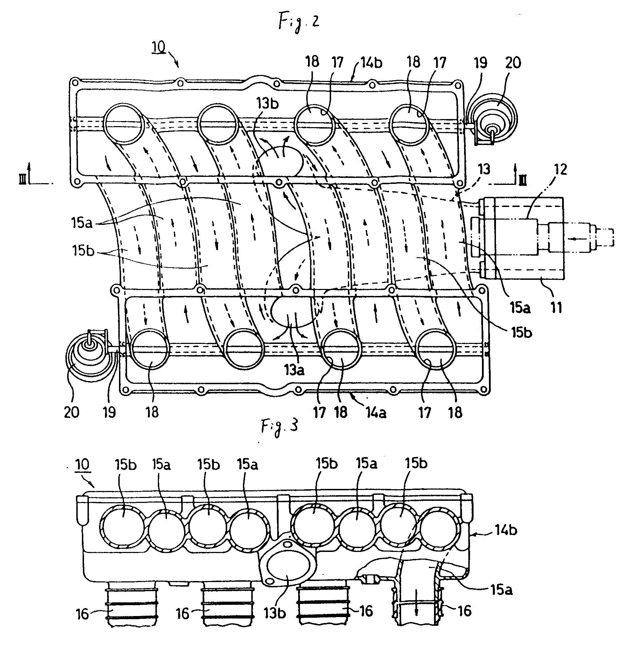

Now, an embodiment of this invention is described in detail refering to attached drawings. Figs. 1-3 show an air intake system equipped on a V-type 8-cylinder engine comrised of a pair of 4-cylinder banks, in which 1 is a V-type multi-cylinder engine and 1a and 1b are cylinders arranged four by four in two banks at left and right in a direction perpendicular to the paper face. Cylinders 1a and 1b have their respective air intake passages 2 mounted on their sides opposite to each other and fuel injection nozzles 3 are mounted so that they reach the interior of the air intake passage 2. Each fuel injection nozzle 3 is connected to its fuel distributing tube 4 on which is mounted a fuel damper 5 and a pressure regulator 6.

10 generally denotes the air intake system. 11 is a throttle box containing within a throttle valve connected to an air cleaner (not shown) on the upstream side. Above this throttle box 11 is installed together a control valve 12 which bypasses this throttle box 11 longitudinaly and which is used for adjusting the idling speed with the throttle valve almost closed. On the downstream side of the throttle box 11 is connected a branch pipe 13 through which the throttle box 11 is connected to the left and right surge tanks 14a and 14b and then, through connection openings 13a and 13b respectively, is communicated with the surge tank interiors. The branch pipe 13 is installed within the V-shaped space between both cylinders 1a and 1b so as not to interfere engine bulk reduction.

The surge tanks 14a and 14b are disposed above the cylinder bank of cylinder 1a and above the cylinder bank of cylinder 1b respectively, where the axial offset between the right and left cylinder banks caused by the offset between the crankpins (not shown) in turn causes the same axial offset between surge tanks 14a and 14b.

Each of four air intake tubes 15a,^{..},15a starting from the surge tank 14a on one side extends toward the surge tank 14b on the other side, crosses the tank 14b, and then projects downward of its bottom, where it is connected with the air intake passage 2 of the cylinder 1b on the other side through a rubber connector 16. Similarly, each of four air intake tubes 15b,^{..},15b starting from the surge tank 14b on a second side extends toward the surge tank 14a on a first side, crosses the tank 14a, and then projects downward of its bottom, where it is connected with the air intake passage 2 of the cylinder 1a on a first side through a rubber connector 16. Besides, the overall lengths of air intake tubes 15a and 15b are determined so that the effect of inertia supercharging may suit the low speed operating range of the engine.

Further, at the portion of the air intake tube 15b or 15a where it crosses the surge tank 14 a or 14b respectively on the other side, the air intake tube 15b or 15a is provided with an air intake through opening 17 equipped with a control valve 18 to communicate the intake tube 15b or 15a with the interior of the surge tank 14a or 14b when the control valve 18 is opened.

All control valves 18 on one side are integrally joined to one valve shaft 19 which is driven by an actuator 20. The actuator 20 comprises a diaphragm which operates through engine suction vacuum, thus it will not operate at lower engine speeds but will operate when the engine speed exceeds a predetermined limit. Accordingly, the control valve 18 is kept closed while running at lower speeds, but it is opened by the actuator 20 when the engine speed reaches a predetermined limit. Besides, the length of the short portion of the air intake tube 15b or 15a from the opening 17 to the connection with the air intake passage 2 is determined so that the effect of inertia supercharging may suit the high speed operating range of the engine.

While the engine is running at lower speeds, since the control valve 18 remains closed, the intake air supplied to each surge tank 14a or 14b is supplied to the cylinder 1b or 1a on the opposite side through respective air intake tube 15a or 15b, that is, from each surge tank 14a or 14b through overall length of the air intake tube 15a or 15b. On the contrary,when the engine is running at a high speed, since the control valve 18 is opened, the air taken into each surge tank 14a or 14b enters, as shown in Fig.1 by chain line arrows, into the mating intake tube 15b or 15a short-circuitingly through the opening 17, and then is supplied to the cylinder 1a or 1b on the same side. Accordingly, at this higher speed, the intake air can be supplied not only through overall length of the air intake tube 15a or 15b but also through short tube length short-circuited through the opening 17. Thus, since air is taken in through a long air intake tube while the engine is running at lower speeds and additionally through a short air intake tube while the engine is running at higher speeds, it becomes possible to maintain a high charging efficieny throughout a wide engine operating range from low speed to high speed and also to obtain high engine output.

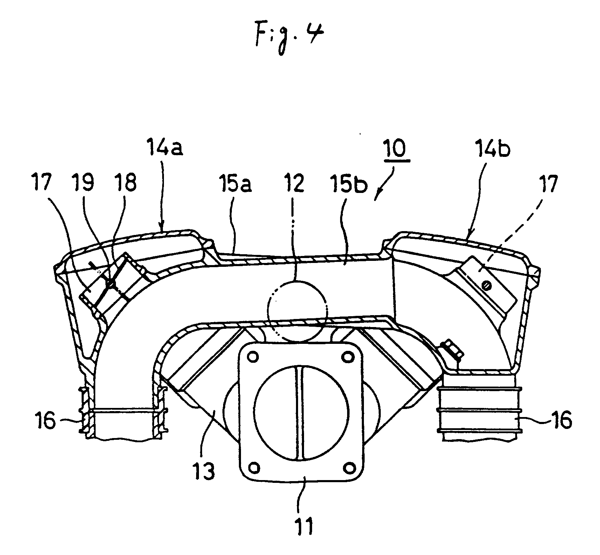

In the above-mentioned embodiment shown in Figs. 1-3, the opening 17 for short-circuiting is generally aligned with the air intake passage 2 of the engine 1 to reduce the intake resistance during high speed operation. However, this opening 17 is not necessarily to be aligned with the passage 2, but may be inclined as shown in Fig.4. In this case shown in Fig.4, it is possible to make the cap portion of the surge tank 14a or 14b lower than that of the above-mentioned embodiment and thus to lower overall height of the engine 1.

Further, although the air intake tube 15a or 15b in the above-mentioned embodiment crosses the surge tank 14b or 14a, respectively, on the other side, the upper wall of the air intake tube may be formed in common with the bottom wall of the surge tank instead as if they are in contact with each other. As regards crossing manner, either the whole section of the air intake tube may penetrate through the surge tank, or some partial section of the intake tube may penetrate into the surge tank.

In the above-mentioned air intake system and V-type multi-cylinder engine according to this invention, since a single air intake tube connected to each cylinder works both as a long intake tube for low speed operation and as a short one for high speed operation, for example, it is not necessary to install both long and short intake tubes simultaneously between both cylinder banks. Accordingly, the overall height or overall longitudinal length of the engine can be reduced as compared with those incorporated with prior-art intake systems and engines of that type.

According to this embodiment of the present invention, as described above, since the air intake tube extending from the surge tank on one side crosses or makes contact with the surge tank on the other side while being connected to the cylinder located thereinunder, and, at the portion of the air intake tube where it crosses or makes contact with the surge tank on the other side, the air intake tube is provided with an opening communicated with the interior of the surge tank on the other side and equipped with a control valve which is to be opened at a higher engine speed and to be closed at a lower engine speed to supply air through the short tube portion formed by short-circuiting through the opening while running at a higher speed and to supply air through the long tube portion with the control valve closed while running at a lower speed, it is possible to obtain high engine output throughout a wide engine operating range from low speed to high speed. Further, since only as many air intake tubes as cylinders (only one tube per one cylinder) are arranged between a pair of cylinder banks longitudinaly of the engine, and only two surge tanks are sufficient, the overall height and length of the engine can be reduced to obtain a more compact engine.

## Claims

1. V-type multi-cylinder engine having a pair of cylinder banks (1a, 1b) disposed in V-shape, and an air intake system comprising surge tanks (14a, 14b) each disposed above each of the cylinder banks (1a, 1b) and air intake tubes (15a, 15b) each branched from one surge tank (14a, 14b) and connected with the associated cylinder (1a, 1b) respectively, each air intake tube (15a, 15b) extending from the surge tank (14a, 14b) of the one cylinder bank to the associated cylinder of the other cylinder bank is communicated through an intake opening (17) to said the other surge tank (14a, 14b) wherein the intake opening (17) being controlled by a flap valve (18) in response to the revolution speed of the engine (1) **characterised in that** each air intake tube (15a, 15b) comprises an integral socket defining said intake opening (17), and being disposed in the interior of the opposite surge tank (14a, 14b) the flow area of the intake opening (17) being controlled by said flap valve (18), and that at least the air intake tubes (15a, 15b) with the intake sockets defining the intake openings (17) and part of the surge tanks (14a, 14b) are designed integrally and that the integrated surge tanks (14a, 14b) and the air intake tubes (15a, 15b) are connected to the air intake passage (2) of the cylinder (1a, 1b) through a rubber connector (16).

2. V-type multi-cylinder engine as claimed in claim 1, **characterised in that** said intake opening (17) being disposed in the area of an air intake tube (15a, 15b) intersecting the opposite surge tank (14a,14b).

3. V-type multi-cylinder engine as claimed in claims 1 or 2, **characterised in that**, the flap valves (18) of the associated surge tank (14a, 14b) are linked by a common valve shaft (19) which, in turn, is driven by an actuator (20).

4. V-type multi-cylinder engine as claimed in claim 3, **characterised in that**, the control flap valves (18) of one side are integrally joined to the supporting valve shaft (19).

5. V-type multi-cylinder engine as claimed in claims 3 or 4, **characterised in that**, the actuator (20) comprises a diaphragm which is subjected to the engine suction vacuum making the diaphragm operate when the engine speed exceeds a predetermined level.

6. V-type multi-cylinder engine as claimed in any of the preceeding claims 1-5, **characterised in that**, said cylinder banks and related surge tanks (14a, 14b) above said cylinder banks extend in parallel to each other.

7. V-type multi-cylinder engine as claimed in claim 6, **characterised in that**, said air intake tubes (15a, 15b) branch alternately from the surge tanks (14a, 14b) of the one and the other side respectively, substantially bridging a space in between both cylinder banks.

8. V-type multi-cylinder engine as claimed in any of the preceeding claims 1-7, **characterised in that**, the air intake system comprises a throttle box (11) with a throttle valve disposed therein, said throttle box (11) being connected to an air cleaner on the upstream side thereof whereas the downstream side of the throttle box (11) is connected to the opposite surge tanks (14a, 14b) through a branch pipe (13) opening through connection openings (13a, 13b) to the interior of the surge tanks (14a, 14b).

9. V-type multi-cylinder engine as claimed in claim 8, **characterised in that**, the throttle box (11) and the branch pipe (13) are disposed within the V-shaped space in between both cylinder rows (1a, 1b) with a control valve (12) bypassing the throttle box (11) in longitudinally for adjusting the idling speed with the throttle valve almost closed being disposed above the throttle box (11).

10. V-type multi-cylinder engine as claimed in at least one of the preceding claims 1 to 9, **characterised in that**, the intake through opening (17) defined by the integral intake socket of the air intake tube (15a, 15b) is generally aligned with an air intake passage (2) of the associated cylinder (1a, 1b) of the engine.

11. V-type multi-cylinder engine as claimed in at least one of the preceding claims 1 to 10, **characterised in that**, the intake through opening (17) is inclined with respect to the associated air intake passage (2) of the cylinder (1a, 1b) concerned respectively.

12. V-type multi-cylinder engine as claimed in at least one of the preceding claims 1 to 11, **characterised in that**, the control flap valve (18) is opened at higher engine speeds and is closed at lower engine speeds.

## Patentansprüche

1. Mehrzylindermotor vom V-Typ, der ein Paar Zylinderbänke (1a, 1b) aufweist, die in V-Form angeorndet sind und mit einem Lufteinlaßsystem, mit Druckausgleichsbehältern (14a, 14b), von denen jeder oberhalb jeder der Zylinderbänke (1a, 1b) angeordnet ist und Lufteinlaßrohre (15a, 15b), die jeweils von einem Druckausgleichsbehälter (14a, 14b) abzweigen und mit dem zugehörigen Zylinder (1a, 1b) jeweils verbunden sind, wobei jedes Lufteinlaßrohr (15a, 15b), das sich von dem Druckausgleichsbehälter (14a, 14b) der einen Zylinderbank zu dem zugehörigen Zylinder der anderen Zylinderbank erstreckt, durch eine Einlaßöffnung (17) mit dem anderen Druckausgleichsbehälter (14a, 14b) verbunden ist, wobei die Einlaßöffnung (17) durch ein Klappenventil (18) in Abhängigkeit von der Drehzahl des Motors (1) gesteuert wird, **dadurch gekennzeichnet,** daß jedes Lufteinlaßrohr (15a, 15b) einen einstückigen Stutzen aufweist, der die Einlaßöffnung (17) bildet und im Inneren des gegenüberliegenden Druckausgleichsbehälters (14a, 14b) angeordnet ist, wobei der Strömungsquerschnitt der Einlaßöffnung (17) durch das Klappenventil (18) gesteuert wird, und daß zumindest die Lufteinlaßrohre (15a, 15b) mit den Einlaßstutzen, die die Einlaßöffnungen (17) bilden und ein Teil der Druckausgleichsbehälter (14a, 14b) einstückig ausgeführt sind und daß die integralen Drvckausgleichsbehälter (14a, 14b) und die Lufteinlaßrohre (15a, 15b) mit den Lufteinlaßkanälen (2) der Zylinder (1a, 1b) durch einen Gummiverbinder (16) verbunden sind.

2. Mehrzylindermotor vom V-Typ nach Anspruch 1, **dadurch gekennzeichnet,** daß die Einlaßöffnung (17) in dem Bereich eines Lufteinlaßrohres (15a, 15b) angeordnet ist, die den gegenüberliegenden Druckausgleichsbehälter (14a, 14b) durchdringt.

3. Mehrzylindermotor vom V-Typ nach Anspruch 1 oder 2, **dadurch gekennzeichnet,** daß die Klappenventile (18) des zugehörigen Druckausgleichsbehälters (14a, 14b) durch eine gemeinsame Ventilwelle (19) verbunden sind, die ihrerseits durch ein Betätigungsglied (20) angetrieben wird.

4. Mehrzylindermotor vom V-Typ nach Anspruch 3, **dadurch gekennzeichnet,** daß die Steuer-Klappenventile (18) der einen Seite einstückig mit der lagernden Ventilwelle (19) verbunden sind.

5. Mehrzylindermotor vom V-Typ nach Anspruch 3 oder 4, **dadurch gekennzeichnet,** daß das Betätigungsglied (20) ein Diaphragma ist, das dem Motoransaugunterdruck ausgesetzt ist, der das Diaphragma betätigt, wenn die Motordrehzahl ein vorgegebenes Niveau übersteigt.

6. Mehrzylindermotor vom V-Typ nach einem der vorhergehenden Ansprüche 1 bis 5, **dadurch gekennzeichnet,** daß die Zylinderbänke und die zugehörigen Druckausgleichsbehälter (14a, 14b) oberhalb der Zylinderbänke sich parallel zueinander erstrecken.

7. Mehrzylindermotor vom V-Typ nach Anspruch 6, **dadurch gekennzeichnet,** daß die Lufteinlaßrohre (15a, 15b) alternierend von den Druckausgleichsbehältern (14a, 14b) der jeweils einen und anderen Seite abzweigen und im wesentlichen einen Raum zwischen beiden Zylinderbänken überbrücken.

8. Mehrzylindermotor vom V-Typ nach einem der vorhergehenden Ansprüche 1 bis 7, **dadurch gekennzeichnet,** daß das Lufteinlaßsystem einen Drosselkasten (11) mit einem in diesem angeordneten Drosselventil aufweist, wobei der Drosselkasten (11) mit einem Luftreiniger an seiner stromaufseitigen Seite verbunden ist, während die stromabseitige Seite des Drosselkastens (11) mit dem gegenüberliegenden Druckausgleichsbehälter (14a, 14b) durch ein Zweigrohr (13) verbunden ist, das sich durch Verbindungsöffnungen (13a, 13b) zu dem Inneren der Druckausgleichsbehälter (14a, 14b) öffnet.

9. Mehrzylindermotor vom V-Typ nach Anspruch 8, **dadurch gekennzeichnet,** daß die Drosselbox (11) und das Zweigrohr (13) innerhalb des V-förmigen Raumes zwischen beiden Zylinderreihen (1a, 1b) angeordnet sind, mit einem Steuerventil (12), das die Drosselbox (11) in Längsrichtung überbrückt, zur Einstellung der Leerlaufdrehzahl, wobei das nahezu geschlossene Drosselventil oberhalb der Drosselbox (11) angeordnet ist.

10. Mehrzylindermotor vom V-Typ nach zumindest einem der vorhergehenden Ansprüche 1 bis 9, **dadurch gekennzeichnet,** daß die Einlaßdurchgangsöffnung (17), die durch den einstückigen Einlaßstutzen des Lufteinlaßrohres (15a, 15b) gebildet ist, im wesentlichen mit einem Lufteinlaßkanal (2) des zugehörigen Zylinders (1a, 1b) des Motors ausgerichtet ist.

11. Mehrzylindermotor vom V-Typ nach zumindest einem der vorhergehenden Ansprüche 1 bis 10, **dadurch gekennzeichnet,** daß die Einlaßdurchgangsöffnung (17) in bezug auf den zugehörigen Lufteinlaßkanal (2) des jeweils betroffenen Zylinders (1a, 1b) geneigt angeordnet ist.

12. Mehrzylindermotor vom V-Typ nach zumindest einem der vorhergehenden Ansprüche 1 bis 11, **dadurch gekennzeichnet,** daß das Steuer-Klappenventil (18) bei höheren Motordrehzählen geöffnet ist und bei niedrigeren Motordrehzahlen geschlossen ist.

## Revendications

1. Moteur à plusieurs cylindres en V, présentant une paire de rangées de cylindres (1a, 1b) agencés en V, et un système d'admission d'air comprenant des réservoirs de compensation (14a, 14b) dont chacun se trouve au-dessus de chacune des rangées de cylindres (1a, 1b), ainsi que des tubulures (15a, 15b) d'admission d'air dont chacune part de l'un des réservoirs de compensation (14a, 14b) et est respectivement raccordée au cylindre associé (1a, 1b), chaque tubulure (15a, 15b) d'admission d'air, s'étendant du réservoir de compensation (14a, 14b) de l'une des rangées de cylindres jusqu'au cylindre associé de l'autre rangée de cylindres, étant en communication avec ledit autre réservoir de compensation (14a, 14b) par l'intermédiaire d'un orifice d'admission (17), l'orifice d'admission (17) étant commandé par un volet basculant (18), en réponse à la vitesse angulaire au moteur (1), caractérisé par le fait que chaque tubulure (15a, 15b) d'admission d'air comprend une douille solidaire délimicant ledit orifice d'admission (17) et logée à l'intérieur du réservoir de compensation (14a, 14b) opposé, la section d'écoulement de l'orifice d'admission (17) étant commandée par ledit volet basculant (18) ; par le fait qu'au moins les tubulures (15a, 15b) d'admission d'air sont conçues d'un seul bloc avec les douilles d'admission délimitant les orifices d'admission (17) et avec une partie des réservoirs de compensation (14a, 14b) ; et par le fait que les réservoirs de compensation (14a, 14b) intégrés et les tubulures (15a, 15b) d'admission d'air sont raccordés, par l'entremise d'une pièce de raccordement (16) en caoutchouc, au canal (2) d'admission d'air du cylindre (1a, 1b).

2. Moteur à plusieurs cylindres en V, selon la revendication 1, caractérisé par le fait que ledit orifice d'admission (17) est situé dans la zone d'une tubulure (15a, 15b) d'admission d'air croisant le réservoir de compensation (14a, 14b) opposé.

3. Moteur à plusieurs cylindres en V, selon la revendication 1 ou 2, caractérisé par le fait que les volets basculants (18) du réservoir de compensation (14a, 14b) associé sont solidarisés par un axe commun (19) porte-volets entraîné, à son tour, par un dispositif d'actionnement (20).

4. Moteur à plusieurs cylindres en V, selon la revendication 3, caractérisé par le fait que les volets basculants de commande (18), situés sur l'un des côtés, sont reliés d'un seul tenant à l'axe (19) porte-volets exerçant un effet de support.

5. Moteur à plusieurs cylindres en V, selon la revendication 3 ou 4, caractérisé par le fait que le dispositif d'actionnement (20) comprend un diaphragme soumis à la dépression d'aspiration du moteur provoquant l'entrée en action dudit diaphragme lorsque la vitesse du moteur excède un niveau prédéterminé.

6. Moteur à plusieurs cylindres en V, selon l'une quelconque des revendications précédentes 1-5, caractérisé par le fait que lesdites rangées de cylindres, et les réservoirs de compensation (14a, 14b) correspondants situés au-dessus desdites rangées de cylindres, s'étendent parallèlement les uns aux autres.

7. Moteur à plusieurs cylindres en V, selon la revendication 6, caractérisé par le fait que lesdites tubulures (15a, 15b) d'admission d'air partent, en alternance, des réservoirs de compensation (14a, 14b) de l'un et de l'autre côtés respectifs, coiffant pour l'essentiel un espace situé entre les deux rangées de cylindres.

8. Moteur à plusieurs cylindres en V, selon l'une quelconque des revendications précédentes 1-7, caractérisé par le fait que le système d'admission d'air comprend un boîtier d'étranglement (11) dans lequel est logée une valve d'étranglement, ledit boîtier d'étranglement (11) étant relié à un filtre à air sur son côté amont, tandis que le côté aval du boîtier d'étranglement (11) est relié, aux réservoirs de compensation (14a, 14b) opposés, par l'intermédiaire d'une tubulure d'embranchement (13) débouchant, par des orifices de jonction (13a, 13b), vers l'intérieur des réservoirs de compensation (14a, 14b).

9. Moteur à plusieurs cylindres en V, selon la revendication 8, caractérisé par le fait que le boîtier d'étranglement (11) et la tubulure d'embranchement (13) sont disposés dans les limites de l'espace configuré en V et situé entre les deux rangées de cylindres (1a, 1b), une soupape de commande (12), contournant longitudinalement le boîtier d'étranglement (11) pour régler la vitesse de ralenti lorsque la valve d'étranglement est presque fermée, étant disposée au-dessus du boîtier d'étranglement (11).

10. Moteur à plusieurs cylindres en V, selon au moins l'une des revendications précédentes 1 à 9, caractérisé par le fait que l'orifice d'admission (17), délimité par la douille d'admission solidaire de la tubulure (15a, 15b) d'admission d'air, est sensiblement aligné avec un canal (2) d'admission d'air du cylindre associé (1a, 1b) du moteur.

11. Moteur à plusieurs cylindres en V, selon au moins l'une des revendications précédentes 1 à 10, caractérisé par le fait que l'orifice d'admission (17) est incliné par rapport au canal associé (2) d'admission d'air du cylindre (1a, 1b) respectivement ccnsidéré.

12. Moteur à plusieurs cylindres en V, selon au moins l'une des revendications précédentes 1 à 11, caractérisé par le fait que le volet basculant de commande (18) est ouvert à des vitesses élevées du moteur, et fermé à de faibles vitesses du moteur.
